# EUROPEAN PATENT APPLICATION

(11) **EP 4 769 797 A1**
(43) Date of publication of application: **01.07.2026**
(21) Application number: 25214677.4
(22) Date of filing: 10.11.2025
(51) Int. Cl.: H01M 50/503, H01M 50/562

(54) **CONNECTING MEMBER AND BATTERY PACK**

(30) Priority: 27.12.2024 KR 20240198858
(71) Applicant: SAMSUNG SDI CO., LTD., Yongin-si, Gyeonggi-do 17084 (KR)
(72) Inventor: KIM, Jung Soo, 16678 Suwon-si (KR); LEE, Yong Jin, 16678 Suwon-si (KR); KANG, Il Oh, 16678 Suwon-si (KR)
(74) Representative: Marks & Clerk LLP

(57) **Abstract**

A connecting member and a battery pack including the same are disclosed. The connecting member includes a first member including an insertion passage at a side thereof, and a second member including an insertion portion at a side thereof, and the insertion portion is inserted in the insertion passage and connected to the first member.

## Description

### BACKGROUND

### 1. Field

The present disclosure relates to a connecting member and a battery pack including the same.

### 2. Discussion of Related Art

In general, with the rapid spread of electronic devices that use batteries, such as portable phones, laptop computers, and electric vehicles, the demand for high energy density and high-capacity battery cells is rapidly increasing. Accordingly, research and development to improve the performance of lithium battery cells is actively being conducted.

A lithium battery cell is a battery that includes a positive electrode and a negative electrode including active materials capable of intercalation and deintercalation of lithium ions, and an electrolyte, and produces electrical energy through oxidation and reduction reactions when lithium ions are intercalated/deintercalated into/from the positive electrode and negative electrode.

A battery cell may be used in a single form, or in the form of a battery module or battery pack, which is a unit formed by connecting a plurality of battery cells.

The above-described information disclosed in the background technology of this invention is provided to improve understanding of the background of the present invention and, therefore, may include information that does not constitute prior art.

### SUMMARY

According to an aspect of embodiments of the present invention, a connecting member that connects two or more battery cells and/or a battery pack including the connecting member are provided.

According to another aspect of embodiments of the present invention, a battery pack including a connecting member including two or more materials is provided.

According to another aspect of embodiments of the present invention, a connecting member including a sandwich structure and/or a battery pack including the connecting member are provided.

According to another aspect of embodiments of the present invention, a connecting member having high strength and/or a battery pack including the connecting member are provided.

According to another aspect of embodiments of the present invention, a connecting member having high welding reliability with a battery cell and/or a battery pack including the connecting member are provided.

However, aspects of the present invention and technical problems to be solved by the present invention are not limited to the aspects and problems to be solved described above, and other aspects and problems to be solved that are not described may be clearly understood by those skilled in the art from the description of the invention described below.

According to an aspect of the present invention, a connection member includes: a first member including an insertion passage at a side thereof; and a second member including an insertion portion at a side thereof and connected to the first member as the insertion portion is inserted in the insertion passage.

The first member may comprise a first material, and the second member may comprise a second material different from the first material.

A bonded interface, which is bonded in a semi-molten or room-temperature molten state, may be formed between the insertion portion and the insertion passage.

A length of a section of the insertion portion inserted in the insertion passage may be 30% or more and 60% or less of a width of the insertion portion.

A thickness of the second member may be 15% or more and 45% or less of a thickness of the first member.

According to another aspect of the present invention, a battery pack includes: a plurality of battery cells, each of which includes a first terminal and a second terminal; and a connecting member that electrically connects at least some of the plurality of battery cells, wherein the connecting member includes: a first member including an insertion passage at a first side thereof and a first joint portion at a second side thereof and joined to the first terminal of a battery cell of the plurality of battery cells; and a second member including an insertion portion at a first side thereof and inserted in the insertion passage and connected to the first member and a second joint portion at a second side thereof and joined to the second terminal of a battery cell of the plurality of battery cells.

The first terminal may comprise the first material, and the second terminal may comprise the second material.

The first terminal may comprise aluminum, and the first material may comprise aluminum.

The second terminal may comprise one or more of iron and SUS, and the second material may comprise one or more of copper, nickel, tungsten, silver, gold, titanium, and an alloy thereof.

At least one of a peel strength between the first joint portion and the first terminal and a peel strength between the second joint portion and the second terminal may be 50 kgf or greater.

A resistance formed between the first joint portion and the first terminal may be 0.06 mΩ or less.

A resistance formed between the second joint portion and the second terminal may be less than 0.12 mΩ.

At an interface between the first joint portion and the first terminal, an area of the first terminal may be greater than or equal to an area of the first joint portion.

The plurality of battery cells may comprise a first battery cell and a second battery cell that are electrically connected by the connecting member, and a distance between the first terminal of the first battery cell and the second terminal of the second battery cell may be 20 mm or greater and 57.5 mm or less.

Each of the plurality of battery cells may further comprise: an electrode assembly comprising a first electrode and a second electrode; a case electrically connected to the second electrode to form the second terminal and accommodating the electrode assembly; and a rivet electrically connected to the first electrode to form the first terminal and coupled to a hole of the case.

At least some of the above and other features of the invention are set out in the claims.

### BRIEF DESCRIPTION OF THE DRAWINGS

The following drawings attached to the present specification illustrate some embodiments of the present invention and further describe aspects and features of the present invention together with the detailed description of the present invention. However, the present invention is not to be construed as being limited to the drawings, in which:
FIG. 1 is a perspective view schematically illustrating a configuration of a battery pack according to an embodiment of the present invention;
FIG. 2 is a perspective view schematically illustrating a battery cell according to an embodiment of the present invention;
FIG. 3 is a cross-sectional view schematically illustrating a configuration of the battery cell of FIG. 2;
FIG. 4 is a perspective view schematically illustrating a battery pack including a connecting member according to an embodiment of the present invention;
FIG. 5 is a perspective view schematically illustrating a battery pack including a connecting member according to an embodiment of the present invention;
FIG. 6 is a top view schematically illustrating a connecting member according to an embodiment of the present invention;
FIG. 7 is a cross-sectional view along the line B-B' in FIG. 4 according to an embodiment of the present invention;
FIG. 8 is a cross-sectional view along the line B-B' in FIG. 4 according to an embodiment of the present invention;
FIG. 9 is a view for describing a connecting member according to an embodiment of the present invention;
FIG. 10 is a view for describing a connecting member according to an embodiment of the present invention;
FIG. 11 is a view for describing a connecting member according to an embodiment of the present invention; and
FIG. 12 is a perspective view schematically illustrating a battery pack according to an embodiment of the present invention.

### DETAILED DESCRIPTION

Herein, some example embodiments of the present invention will be described in further detail with reference to the attached drawings. Terms or words used in this specification and claims are not to be interpreted as being limited to ordinary or dictionary meanings and are to be interpreted as having meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some of the embodiments of the invention and do not necessarily represent all of the technical ideas of the invention, and that there may be various equivalents and modifications that may replace them at the time of filing.

Further, when used herein, the terms "comprise" or "include" and/or "comprising" or "including" specify the presence of the mentioned shapes, numbers, steps, operations, members, elements, and/or groups thereof and are not intended to exclude the presence or addition of one or more other shapes, numbers, operations, members, elements, and/or groups thereof.

In addition, for reasons of understanding of the invention, the attached drawings may not be drawn to actual scale, and the dimensions of some components may be exaggerated. In addition, the same reference numbers may be assigned to the same components in different embodiments.

The statement that two objects for comparison are "equal" may mean the same or substantially the same. The same or substantially the same may include deviations that are considered low in the art, for example, deviations of less than 5%. Additionally, uniformity of a parameter over a given region may mean uniformity from an average perspective.

Although "first," "second," and the like may be used to describe various components, the components are not limited by these terms. These terms are used to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the above components may be directly connected or coupled to each other, but it is to be understood that other components may be "interposed" between each component, or each component may be "connected," "coupled," or "linked" through another component.

As used herein, the term "and/or" includes any and all combinations of one or more of the associated listed items. Further, the use of "may" when describing embodiments of the present invention relates to "one or more embodiments of the present invention." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above."

The terms used in the present specification are intended to describe the embodiments of the present invention, and are not intended to limit the present invention.

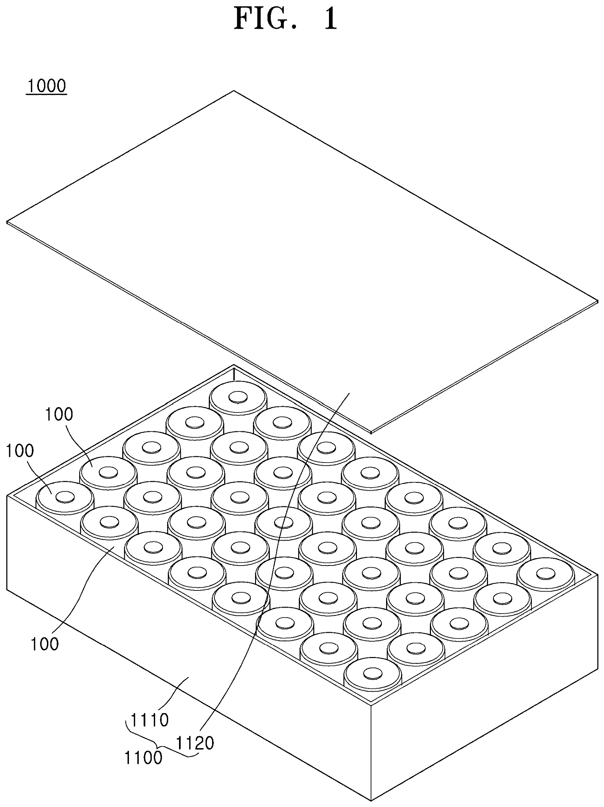

FIG. 1 is a perspective view schematically illustrating a configuration of a battery pack 1000 according to an embodiment of the present invention.

The battery pack 1000 includes a housing 1100 and a battery cell 100.

The housing 1100 forms a general exterior of the battery pack 1000 and may provide a space in which the battery cell 100 may be accommodated.

The housing 1100 may include a housing body 1110 and a cover 1120.

The housing body 1110 may be formed to have a shape of a box with an empty interior and an open side. However, the cross-sectional shape of the housing body 1110 is not limited to the rectangular shape illustrated in FIG. 1, and may have any of various shapes, such as another polygonal shape, a circular shape, an oval shape, and the like.

The cover 1120 may be coupled to the housing body 1110 and close the interior space of the housing body 1110. As an example, the cover 1120 may be formed to have a generally plate shape and may be disposed to face the open side of the housing body 1110. The cover 1120 may be fixed to the housing body 1110 by any of various types of coupling methods, such as bolting, welding, fitting, and the like.

The battery cell 100 may function as a unit structure for storing and supplying power in the battery pack 1000.

A plurality of the battery cells 100 may be provided. The plurality of battery cells 100 may be disposed inside the housing 1100 to form any of various patterns, such as a grid shape, a zigzag shape, and the like. The plurality of battery cells 100 may be arranged parallel to each other. The number of battery cells 100 may be varied in various ways depending on the size, shape, and the like of the housing 1100. A configuration of the battery cell 100 will be described below.

Herein, the battery cell 100 according to an embodiment of the present invention will be described.

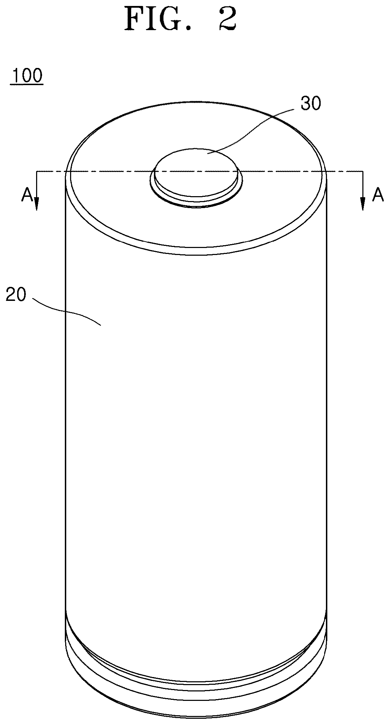

FIG. 2 is a perspective view schematically illustrating a battery cell 100 according to an embodiment of the present invention.

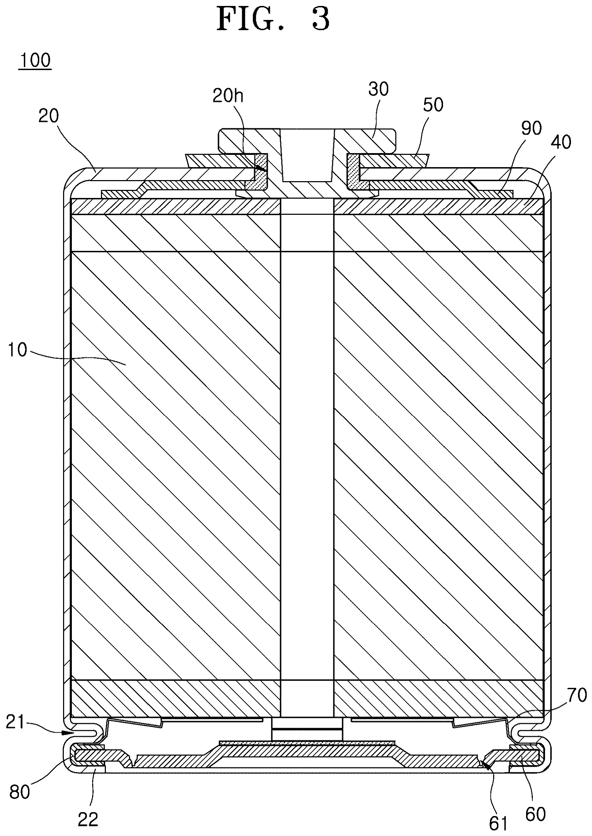

FIG. 3 is a cross-sectional view schematically illustrating a configuration of the battery cell 100 of FIG. 2.

Referring to FIGS. 2 and 3, a battery cell 100 according to an embodiment (including, for example, the battery cell 100 in FIG. 1) includes an electrode assembly 10 and a case 20 for accommodating the electrode assembly 10. The battery cell 100 further includes a rivet, or terminal, 30 inserted into a hole 20h formed in a side of the case 20, the rivet 30 being electrically connected to the electrode assembly 10, and a cap plate 60 covering an opening formed in another side of the case 20. However, components of the battery cell 100 are not limited to the components illustrated in FIGS. 2 and 3, and the battery cell 100 may include only some of the components illustrated in FIGS. 2 and 3, and/or may further include other components in addition to the components illustrated in FIGS. 2 and 3.

Herein, an example in which the battery cell 100 is a cylindrical lithium-ion secondary battery will be described. However, the present invention is not limited thereto, and the battery cell 100 may be a lithium polymer battery or a prismatic battery, for example.

The electrode assembly 10 may function as a unit structure which performs charging and discharging operations of power in the battery cell 100.

The electrode assembly 10 includes a first electrode and a second electrode. The first electrode is a positive electrode or a negative electrode. The second electrode is a negative electrode or a positive electrode and has a different polarity from the first electrode. Herein, an example is described in which the first electrode is a positive electrode and the second electrode is a negative electrode.

In addition, the electrode assembly 10 may further include a separator between the first electrode and the second electrode. The separator may prevent or substantially prevent the first electrode and the second electrode from coming into contact with each other, and may prevent or substantially prevent a short circuit from occurring between the first electrode and the second electrode. Accordingly, the electrode assembly 10 may be formed by stacking the first electrode, the second electrode, and the separator provided between the first electrode and the second electrode.

In an embodiment, for example, the electrode assembly 10 forms a cylindrical shape, and a stacked structure including the first electrode, the second electrode, and the separator may be wound to form a jellyroll. For example, the electrode assembly 10 may have a shape that is wound clockwise or counterclockwise around a winding axis. A cross-sectional shape of the electrode assembly 10 may be designed to have any of various shapes, such as an oval shape, a polygonal shape, and the like, in addition to the circular shape. Here, the winding axis may refer to a straight line passing through the center of the electrode assembly 10.

A further detailed description of each component of the electrode assembly 10 is as follows.

### Positive electrode active material

As the positive electrode active material, a compound capable of reversible intercalation and deintercalation of lithium (lithiated intercalation compound) may be used. In an embodiment, at least one of composite oxides of lithium and a metal selected from cobalt, manganese, nickel, and a combination thereof may be used.

The composite oxide may be a lithium transition metal composite oxide, and examples thereof may include lithium nickel-based oxides, lithium cobalt-based oxides, lithium manganese-based oxides, lithium iron phosphate-based compounds, cobalt-free nickel-manganese-based oxides, or a combination thereof.

For example, a compound represented as any of the chemical formulas below may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}Dα (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

As an example, the positive electrode active material may be a high nickel-based positive electrode active material with a nickel content of 80 mol% or more, 85 mol% or more, 90 mol% or more, 91 mol% or more, or 94 mol% and 99 mol% based on 100 mol% of metals excluding lithium in the lithium transition metal composite oxide. The high nickel-based positive electrode active material can realize high capacity and thus may be applied to high capacity, high density lithium batteries.

### Positive electrode

The positive electrode for the battery cell 100 may include a current collector and a positive electrode active material layer formed on the current collector. The positive electrode active material layer may include a positive electrode active material, and may further include a binder and/or a conductive material.

As an example, the positive electrode may further include an additive that may serve as a sacrificial positive electrode.

In an embodiment, the content of the positive electrode active material may be 90 wt% to 99.5 wt% based on 100 wt% of the positive electrode active material layer, and the content of each of the binder and the conductive material may be 0.5 wt% to 5 wt% based on 100 wt% of the positive electrode active material layer.

The binder may attach particles constituting the positive electrode active material well to each other and also attach the positive electrode active material well to the current collector. Representative examples of the binder may include polyvinyl alcohol, carboxymethylcellulose, hydroxypropyl cellulose, diacetylcellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but are not limited thereto.

The conductive material imparts conductivity to the electrode, and any suitable material which does not cause a chemical change and is electrically conductive may be used. Examples of the conductive material may include a carbon-based material, such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, silver, etc.; a conductive polymer, such as a polyphenylene derivative; or a mixture thereof.

In an embodiment, Al may be used as the current collector, but the present invention is not limited thereto.

### Negative electrode active material

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite, such as amorphous, plate-shaped, flaky, spherical, or fibrous natural graphite or artificial graphite, and examples of the amorphous carbon may include soft carbon or hard carbon, mesophase pitch carbide, calcined coke, or the like.

In an embodiment, an alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si-based negative electrode active material or Sn-based negative electrode active material may be used as the material capable of doping and dedoping lithium. The Si-based negative electrode active material may include silicon, a silicon-carbon composite, SiOₓ (0 < x ≤ 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, and, for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

### Negative electrode

The negative electrode for the battery cell 100 may include a current collector and a negative electrode active material layer located on the current collector. The negative electrode active material layer may include a negative electrode active material and may further include a binder and/or a conductive material.

In an embodiment, for example, the negative electrode active material layer may include 90 to 99 wt% of the negative electrode active material, 0.5 to 5 wt% of the binder, and 0 to 5 wt% of the conductive material.

The binder may attach particles constituting the negative electrode active material to each other well, and also attach the negative electrode active material to the current collector well. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the negative electrode binder, a cellulose-based compound capable of imparting viscosity may be further included. This cellulose-based compound may be used by mixing one or more of carboxymethyl cellulose, hydroxypropyl methyl cellulose, methyl cellulose, and alkali metal salts thereof. In an embodiment, Na, K, or Li may be used as the alkali metal.

The dry binder is a polymer material capable of being fiberized and may be, for example, polytetrafluoroethylene, polyvinylidene fluoride, a polyvinylidene fluoride-hexafluoropropylene copolymer, polyethylene oxide, or a combination thereof.

The conductive material imparts conductivity to the electrode, and any suitable material which does not cause a chemical change and is electrically conductive may be used. Examples may include a carbon-based material, such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, silver, etc.; a conductive polymer, such as a polyphenylene derivative; or a mixture thereof.

The negative electrode current collector may be selected from copper foil, nickel foil, stainless steel foil, titanium foil, nickel foam, copper foam, a polymer substrate coated with a conductive metal, and a combination thereof.

### Separator

Depending on the type of battery cell 100, a separator may be present between the positive electrode and the negative electrode. As the separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator may include a porous substrate and a coating layer containing an organic material, an inorganic material, or a combination thereof located on one or both, or opposite, sides of the porous substrate.

The porous substrate may be a polymer film formed of any polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth) acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in a single coating layer or may be present in a form in which a coating layer including an organic material and a coating layer including an inorganic material are stacked.

The case 20 accommodates the electrode assembly 10. The case 20 seals the accommodated electrode assembly 10 together with an electrolyte.

### Electrolyte

The electrolyte for the battery cell 100 includes a non-aqueous organic solvent and a lithium salt.

The non-aqueous organic solvent functions as a medium through which ions involved in the electrochemical reaction of the battery cell 100 can move.

The non-aqueous organic solvent may be a carbonate-based solvent, an ester-based solvent, an ether-based solvent, a ketone-based solvent, an alcohol-based solvent, an aprotic solvent, or a combination thereof.

Examples of the carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

Examples of the ether-based solvent may include dibutyl ether, tetraglyme, diglyme, dimethoxyethane, 2-methyltetrahydrofuran, 2,5-dimethyltetrahydrofuran, and tetrahydrofuran. In addition, cyclohexanone and the like may be used as the ketone-based solvent. As the alcohol-based solvent, ethyl alcohol, isopropyl alcohol, and the like may be used, and as the aprotic solvent, a nitrile such as R-CN (R is a straight, branched, or ring-shaped hydrocarbon group having 2 to 20 carbon atoms, and may include a double bond, an aromatic ring, or an ether group), an amide such as dimethylformamide, a dioxolane such as 1,3-dioxolane or 1,4-dioxolane, a sulfolane, and the like may be used.

The non-aqueous organic solvent may be used alone or in a mixture of two or more.

In an embodiment, if using the carbonate-based solvent, a cyclic carbonate and a chain carbonate may be mixed and used, and the cyclic carbonate and the chain carbonate may be mixed in a volume ratio of 1:1 to 1:9.

The lithium salt is a substance that is dissolved in the organic solvent and acts as a source of lithium ions within the battery cell 100, enabling the basic operation of the lithium battery and promoting the movement of lithium ions between the positive electrode and the negative electrode. Representative examples of the lithium salt may include one or more selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOP), and lithium bis(oxalato)borate (LiBOB).

The case 20 is sealed after accommodating the electrode assembly 10 and the electrolyte. For example, the case 20 may be sealed by the cap plate 60.

The case 20 forms the general exterior of the battery cell 100. In an embodiment, the case 20 includes an upper surface forming a circular upper portion, and a side surface, which is connected to an outer surface of the upper side and extends perpendicularly from the upper surface to form a side portion.

The case 20 may have the hole 20h formed in the upper surface thereof. The hole 20h is formed to pass through an upper surface of the case 20. The hole 20h may be located at a central portion of the upper surface of the case 20. The hole 20h may be formed, for example, on an upper side of a winding center of the electrode assembly 10. In an embodiment, a shape of the hole 20h may correspond to a shape of the rivet 30. For example, if a cross-section of the rivet 30 is circular, a cross-section of the hole 20h may be formed in a circular shape. In an embodiment, a diameter of the cross-section of the hole 20h is greater than a diameter of the cross-section of the rivet 30.

In this case, the case 20 may have a cylindrical lower portion that is open. The case 20 may seal the interior by having the opening sealed by the cap plate 60. Accordingly, the case 20 may prevent or substantially prevent the electrolyte from leaking to the outside and protect the electrode assembly 10.

In an embodiment, the case 20 may be made of, for example, steel, e.g. stainless steel, aluminum, an aluminum alloy, a combination thereof, or an equivalent thereof.

The cap plate 60 seals the case 20 while covering the opening of the case 20.

The battery cell 100 may further include a gasket 80 to further ensure that the case 20 is sealed. The gasket 80 may be formed, for example, in a ring shape. The gasket 80 may be located between the cap plate 60 and an inner surface of the case 20 while surrounding an outer surface of the cap plate 60. The gasket 80 may include, for example, a polymer. Accordingly, the gasket 80 may prevent or substantially prevent the electrolyte inside the battery cell 100 from leaking to the outside or safety problems from occurring.

A beading portion 21 may be formed in the case 20 to fix the position of the cap plate 60 to the opening of the case 20. In an embodiment, for example, the beading portion 21 is formed on the lower side of the case 20. The beading portion 21 is formed by recessing the case 20 inward to form a recessed portion. The beading portion 21 prevents or substantially prevents the cap plate 60 from entering further into the case 20 due to the recessed portion. In an embodiment, a crimping portion 22 may be further formed in the case 20 to fix the position of the cap plate 60 to the opening of the case 20. The crimping portion 22 may be formed by curling an end of the opening of the case 20 toward the inside of the case 20. For example, the crimping portion 22 may be formed by being bent toward the inside of the case 20 after the cap plate 60 is provided in the opening of the case 20. Accordingly, the cap plate 60 may cover the opening of the case 20.

The cap plate 60 may concurrently (e.g., simultaneously) function as a vent. In an embodiment, for example, the cap plate 60 may include a groove 61. The groove 61 may rupture when the pressure inside the case 20 increases or the temperature increases. The groove 61 may rupture to discharge gas generated inside the case 20 to the outside.

In an embodiment, the case 20 is electrically connected to the electrode assembly 10 accommodated inside the case 20. For example, the case 20 may be electrically connected to the second electrode. The second electrode may be, for example, a negative electrode.

The battery cell 100 may further include a second current collector plate 70 located at a lower portion of the electrode assembly 10 to electrically connect the case 20 and the second electrode. For example, the second current collector plate 70 may be located between the lower portion of the electrode assembly 10 and an upper portion of the cap plate 60.

In an embodiment, the second current collector plate 70 and the cap plate 60 may be insulated from each other by the gasket 80. The second current collector plate 70 may be, for example, a negative electrode current collector plate. The second current collector plate 70 is connected to the second electrode and collects current. In an embodiment, for example, the second current collector plate 70 is connected to a tab of the second electrode, and the second current collector plate 70 is coupled to the case 20. Accordingly, the case 20 may be electrically connected to the second electrode and have the same polarity as the second electrode. That is, for example, the case 20 may have a negative polarity.

The rivet 30 is inserted into the hole 20h formed in the upper surface of the case 20. The rivet 30 is electrically connected to the electrode assembly 10 accommodated in the case 20. For example, the rivet 30 is electrically connected to the first electrode. The first electrode may be, for example, a positive electrode.

The battery cell 100 may further include a first current collector plate 40 located at an upper portion of the electrode assembly 10 to electrically connect the rivet 30 and the first electrode. The first current collector plate 40 is, for example, a positive electrode current collector plate. The first current collector plate 40 is connected to the first electrode and collects current. For example, the first current collector plate 40 is connected to a tab of the first electrode. In addition, the first current collector plate 40 is connected to the rivet 30. Accordingly, the rivet 30 may be electrically connected to the first electrode and have the same polarity as the first electrode. That is, for example, the rivet 30 may have a positive polarity.

The rivet 30 may include a conductive material for electrical connection with the first electrode. In an embodiment, for example, the rivet 30 includes a metal. In an embodiment, for example, the rivet 30 includes aluminum (Al).

As described above, the rivet 30 is connected to the first electrode. In addition, the case 20 is electrically connected to the second electrode. That is, the case 20 and the rivet 30 have different polarities. In this case, if the case 20 and the rivet 30 come into contact, a short circuit may occur between the case 20 and the rivet 30.

To avoid this, the battery cell 100 may further include an insulator 50 that insulates between the case 20 and the rivet 30.

The insulator 50 is located on a lower side of the rivet 30. Additionally, the insulator 50 is located on an upper side of the case 20. The insulator 50 includes an insulating material. The insulator 50 is located between the case 20 and the rivet 30 and may insulate between the case 20 and the rivet 30. Accordingly, the insulator 50 prevents or substantially prevents a short circuit from occurring between the case 20 and the rivet 30.

The battery cell 100 may further include an insulating layer 90. The insulating layer 90 may be provided on the first current collector plate 40. The insulating layer 90 prevents or substantially prevents the first current collector plate 40 and the case 20 from being electrically connected.

Through this configuration, the battery cell 100 according to an embodiment of the present invention may provide a battery having improved capacity by eliminating the beading portion from the upper portion thereof. In addition, the battery cell 100 may avoid safety or cost problems that may occur if the battery cell 100 explodes upward by positioning the cap plate 60 at the lower portion thereof.

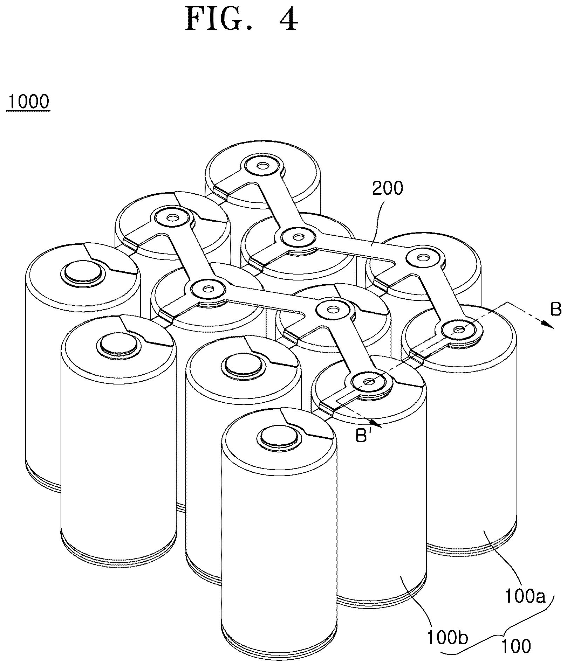

FIG. 4 is a perspective view schematically illustrating a battery pack 1000 including a connecting member 200 according to an embodiment of the present invention.

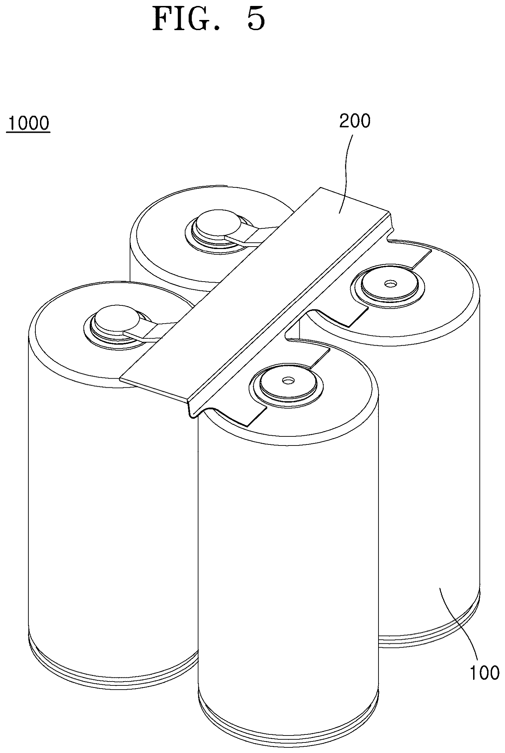

FIG. 5 is a perspective view schematically illustrating a battery pack 1000 including a connecting member 200 according to another embodiment of the present invention.

A battery pack 1000 according to an embodiment of the present invention (including, for example, the battery pack 1000 illustrated in FIGS. 1 to 3) includes a plurality of battery cells 100 (including, for example, the battery cell illustrated in FIGS. 1 to 3), and a connecting member 200 that electrically connects at least some of the plurality of battery cells 100. As illustrated in FIG. 1, the battery pack 1000 may further include a housing 1100 that accommodates the plurality of battery cells 100.

As illustrated in FIG. 1, the battery pack 1000 includes a plurality of battery cells 100. As illustrated in FIGS. 2 and 3, the battery cell 100 may include, for example, a cylindrical battery.

Each of the plurality of battery cells 100 includes a first terminal and a second terminal. The first terminal is electrically connected to the first electrode. For example, the first electrode may be a positive electrode, and the first terminal may be a positive electrode terminal. For example, the positive electrode terminal may be the rivet 30. The second terminal is electrically connected to the second electrode. For example, the second electrode may be a negative electrode, and the second terminal may be a negative electrode terminal. For example, the negative electrode terminal may be the case 20.

In an embodiment, for example, as illustrated in FIG. 4, the plurality of battery cells 100 may be arranged in a zigzag shape. In an embodiment, for example, the plurality of battery cells 100 may be arranged to form a face-centered cubic structure or a body-centered cubic structure.

In an embodiment, for example, as illustrated in FIG. 5, the plurality of battery cells 100 may be arranged in one or more rows. In an embodiment, for example, the plurality of battery cells 100 may be arranged to form a simple cubic structure.

For example, the plurality of battery cells 100 may include a first battery cell 100a and a second battery cell 100b. For example, the first battery cell 100a and the second battery cell 100b may be disposed adjacent to each other.

The connecting member 200 electrically connects two or more of the plurality of battery cells 100. The connecting member 200 may include any member that electrically connects two or more of the plurality of battery cells 100 or is electrically connected to one or more of the plurality of battery cells 100. For example, the connecting member 200 may include a busbar, a tab, or a protection circuit module (e.g., including a battery management system (BMS), protection circuit module (PCM), etc.).

The connecting member 200 may be connected to a terminal of the battery cell 100. For example, the connecting member 200 may be connected to the first terminal. Also, for example, the connecting member 200 may be connected to the second terminal. In an embodiment, for example, the connecting member 200 may be connected to the terminal of the battery cell 100 by welding.

For example, the connecting member 200 may electrically connect the first battery cell 100a and the second battery cell 100b. For example, the connecting member 200 is connected to a first terminal of the first battery cell 100a. Also, for example, the connecting member 200 is connected to a second terminal of the second battery cell 100b.

For example, the connecting member 200 may be connected to one first terminal and one second terminal. Accordingly, the connecting member 200 may electrically connect two battery cells 100 positioned adjacent to each other.

In an embodiment, for example, as illustrated in FIGS. 4 and 5, the connecting member 200 may be connected to a plurality of first terminals and a plurality of second terminals. Accordingly, the connecting member may electrically connect three or more battery cells 100.

For example, as illustrated in FIG. 4, the plurality of battery cells 100 may be arranged in a zigzag shape, and the connecting member 200 may be formed in a zigzag shape corresponding to the arrangement of the battery cells 100 so as to be electrically connected to the battery cells 100.

In an embodiment, for example, as illustrated in FIG. 5, the plurality of battery cells 100 may be arranged in a parallel manner in the form of m rows and n columns (In this case, m is a natural number greater than or equal to 1, and n is a natural number greater than or equal to 1). In this case, columns represent the battery cells arranged in a front-rear direction, and the rows represent the battery cells arranged in a left-right direction. For example, FIG. 5 illustrates an example in which the plurality of battery cells 100 are arranged in 2 rows and 2 columns. The connecting member 200 may be formed in a parallel shape corresponding to the arrangement of the battery cells 100 to be electrically connected to the battery cells 100.

In an embodiment, the conventional connecting member includes a single material. In an embodiment, for example, the connecting member 200 may include only aluminum (Al) or only copper (Cu).

In an embodiment, however, the first terminal and the second terminal contain different materials. In an embodiment, for example, the first terminal contains aluminum (Al), and the second terminal contains copper (Cu).

Accordingly, the conventional connecting member may be joined with low joining strength to at least one of the first terminal and the second terminal. For example, if the connecting member includes aluminum (Al), voids, cracks, or an intermetallic compound (IMC) may be formed between the connecting member 200 and the second terminal. In this case, the connecting member may have reduced joining strength with the second terminal. Also, for example, if the connecting member includes copper (Cu), voids, cracks, or an intermetallic compound (IMC) may be formed between the connecting member 200 and the first terminal. In this case, the connecting member may have reduced joining strength with the second terminal.

Thus, if the joining strength between the connecting member and the battery cell 100 is insufficient, the electrical connection between the connecting member and the battery cell 100 may become weak. The battery pack 1000 may not receive sufficient electrical energy from the battery cell 100, or a safety problem may occur during the charging and discharging process. Therefore, the connecting member 200 needs to be firmly fixed to the battery cell 100.

The connecting member 200 according to an embodiment of the present invention proposes a structure capable of avoiding the problems described above. For example, the connecting member 200 may be formed by combining two or more members, rather than being formed by a single member.

Herein, the connecting member 200 is described in further detail.

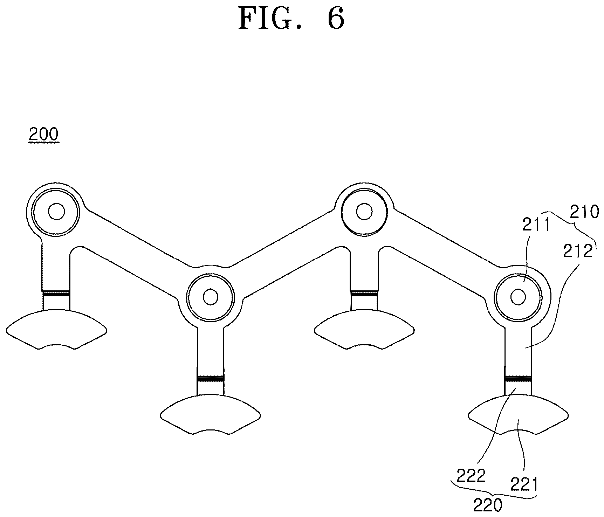

FIG. 6 is a schematic top view illustrating a connecting member 200 according to an embodiment of the present invention.

A connecting member 200 according to an embodiment of the present invention (including, for example, the connecting member illustrated in FIGS. 4 and 5) includes a first member 210 and a second member 220.

As illustrated in FIGS. 4 and 5, the connecting member 200 is electrically connected to the battery cell 100. Additionally, the connecting member 200 electrically connects two or more battery cells 100.

The first member 210 is connected to the first terminal of the battery cell 100. For example, the first member 210 is connected to the rivet 30 of the battery cell 100. The second member 220 is connected to the second terminal of the battery cell 100. For example, the second member 220 is connected to the case 20 of the battery cell 100.

In this case, the battery cell 100 in which the first terminal, to which the first member 210 is connected, is located and the battery cell 100 in which the second terminal, to which the second member 220 is connected, is located are different battery cells. For example, the battery cell to which the first member 210 is connected and the battery cell to which the second member 220 is connected may be located adjacent to each other.

The first member 210 and the second member 220 are connected to each other.

In an embodiment, the first member 210 includes a first joint portion 211 joined to the first terminal and an insertion passage 212 connected to the second member 220.

The first joint portion 211 is connected to the first terminal. In an embodiment, for example, the first joint portion 211 may be joined to the first terminal by welding. Welding may include, for example, ultrasonic welding, laser welding, pulse welding, and other suitable methods used for joining two or more metals.

The first joint portion 211 may be formed in a shape that is easy to connect to the first terminal. For example, the first terminal may include the rivet 30 having a circular shape, as illustrated in FIGS. 2 and 3. In an embodiment, the first joint portion 211 may be formed in a circular plate shape corresponding to the upper shape of the rivet 30.

The insertion passage 212 extends from the first joint portion 211 toward the second member 220. The insertion passage 212 allows the first joint portion 211 and the second member 220 to be connected, and the insertion passage 212 forms a passage therein.

The passage formed inside the insertion passage 212 may be formed from a first side of the first member 210 toward a second side thereof. In this case, the first side of the first member 210 is a side adjacent to the second member 220, and the second side of the first member 210 is a side in which the first joint portion 211 is located.

The insertion passage 212 is connected to the second member 220. For example, the insertion passage 212 may have a passage formed therein that allows the second member 220 to be inserted, thereby being connected to the second member 220. In this case, the passage may be formed to have a size that is greater than or equal to the second member 220. The passage may be formed corresponding to a shape of the second member 220.

For example, the second member 220 includes a second joint portion 221 connected to the second terminal and an insertion portion 222 connected to the first member 210.

The second joint portion 221 is connected to the second terminal. For example, the second joint portion 221 may be joined to the second terminal by welding. Welding may include, for example, ultrasonic welding, laser welding, pulse welding, and other suitable methods used for joining two or more metals.

The second joint portion 221 may be formed in a shape that is easy to connect to the second terminal. For example, the second terminal may include the case 20 of the battery cell 100. In an embodiment, the second joint portion 221 may be formed corresponding to a shape of the case 20. For example, the second joint portion 221 may be formed corresponding to a shape of the upper surface of the case 20 as illustrated in FIG. 6. For example, the second joint portion 221 may be formed corresponding to a shape of a region excluding the rivet 30 on the upper surface of the case 20. In an embodiment, for example, the second joint portion 221 may be formed in a fan shape with an angle of 180°, excluding a central portion (for example, where the rivet 30 is located).

The insertion portion 222 extends from the second joint portion 221 toward the first member 210. The insertion portion 222 allows the second joint portion 221 and the first member 210 to be connected. The insertion portion 222 is inserted into a passage formed in the insertion passage 212 of the first member 210.

In an embodiment, a cross-section of a region into which the insertion portion 222 is inserted forms a sandwich structure formed by the insertion passage 212-the insertion portion 222-the insertion passage 212. Thus, the connecting member 200 may be formed as a single structure by connecting two members to each other.

In this manner, the connecting member 200 separately includes the first member 210 connected to the first terminal and the second member 220 connected to the second terminal. In an embodiment, the first member 210 is formed corresponding to the first terminal. In an embodiment, for example, the first member 210 includes a material corresponding to the first terminal or is formed in a shape corresponding to the first terminal. In addition, the second member 220 is formed corresponding to the second terminal. In an embodiment, for example, the second member 220 includes a material corresponding to the second terminal or is formed in a shape corresponding to the second terminal.

In an embodiment, for example, the first terminal and the second terminal may include different materials. In this case, the first member 210 and the second member 220 may include different materials.

In an embodiment, for example, the first member 210 includes a first material, and the second member 220 includes a second material. In this case, the first material and the second material may be different.

For example, the first member 210 may include the first material to improve the welding reliability with the first terminal of the first battery cell 100a.

The first material includes a material that is easily electrically connected to the first terminal of the first battery cell 100a. For example, the first material includes a conductive material. The conductive material includes, for example, a metal.

In an embodiment, for example, the first material includes a material that is easy to weld to the first terminal of the first battery cell 100a.

In an embodiment, for example, the first member 210 may include the same material as the first terminal of the first battery cell 100a. In an embodiment, for example, the first terminal of the first battery cell 100a includes aluminum (Al), and the first member 210 includes at least one of aluminum (Al), an aluminum alloy, and combinations thereof.

In an embodiment, for example, the first member 210 may include a material that is not the same as a material included in the first terminal of the first battery cell 100a, but is easily weldable to the material included in the first terminal of the first battery cell 100a. In an embodiment, for example, the first terminal of the first battery cell 100a includes aluminum (Al), and the first member 210 may include nickel (Ni), copper (Cu), tungsten (W), silver (Ag), gold (Au), or an alloy including at least one thereof.

Thus, the first material included in the first member 210 may be determined according to the material included in the first terminal of the first battery cell 100a.

For example, the second member 220 may include the second material to improve the welding reliability with the second terminal of the second battery cell 100b.

The second material includes a material that is easily electrically connected to the second terminal of the second battery cell 100b. For example, the second material includes a conductive material. The conductive material includes, for example, a metal.

For example, the second material includes a material that is easy to weld to the second terminal of the second battery cell 100b.

In an embodiment, for example, the second member 220 may include a same material as the second terminal of the second battery cell 100b. In an embodiment, for example, the second terminal of the second battery cell 100b includes at least one of iron (Fe), steel e.g. SUS (Stainless Steel) or SPCE (Cold Rolled Carbon Steel), or an alloy thereof. In an embodiment, for example, the second material includes at least one of iron (Fe), copper (Cu), nickel (Ni), tungsten (W), silver (Ag), gold (Au), titanium (Ti), an alloy thereof, and a combination thereof.

Thus, the second material included in the second member 220 may be determined according to the material included in the second terminal of the second battery cell 100b.

The connecting member 200 according to an embodiment of the present invention is formed by connecting the first member 210 and the second member 220, and thus may be joined with the first terminal and the second terminal, which are formed of different materials and/or shapes, respectively, with high joining reliability. If the materials included in the objects to which the first member 210 and the second member 220 are joined are the same, it is natural that the first material and the second material may be the same.

In addition, the connecting member 200 can secure structural strength in the height direction by forming the sandwich structure rather than a single-layer joint between the first member 210 and the second member 220.

In addition, the battery pack 1000 according to one or more embodiments of the present invention may improve safety and/or charge/discharge efficiency by electrically connecting two or more of the plurality of battery cells 100 through the connecting member 200.

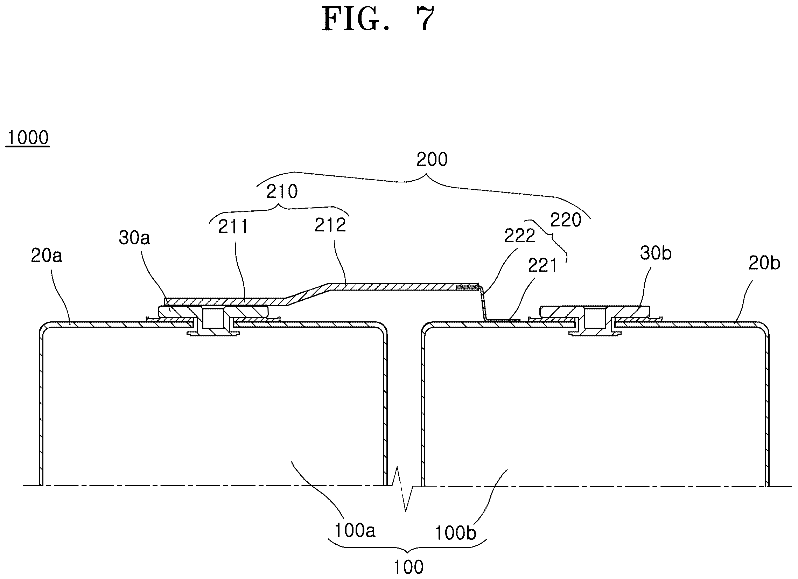

FIG. 7 is a cross-sectional view along line B-B' in FIG. 4 according to an embodiment.

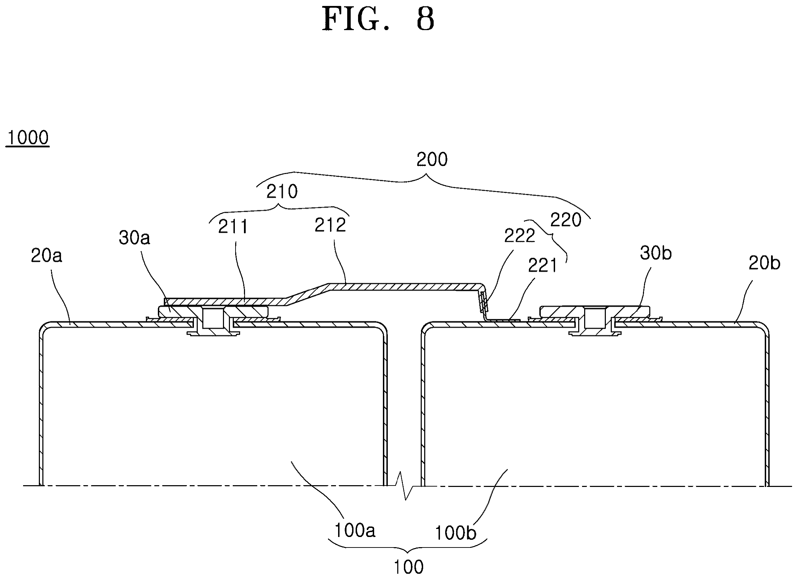

FIG. 8 is a cross-sectional view along line B-B' in FIG. 4 according to an embodiment.

A connecting member 200 according to an embodiment of the present invention (including, for example, the connecting member illustrated in FIGS. 4 to 6) includes a first member 210 provided with an insertion passage formed on a side and a second member 220 provided with an insertion portion formed on a side and connected to the first member 210 as the insertion portion is inserted into the insertion passage.

Additionally, a battery pack 1000 according to an embodiment of the present invention (including, for example, the battery pack illustrated in FIGS. 1, 4 and 5) includes a plurality of battery cells 100 (including, for example, the battery cell illustrated in FIGS. 1 to 5), and the connecting member 200.

In FIGS. 7 and 8, a shape of the connecting member 200 and a connection mode between the first member 210 and the second member 220 are shown. For convenience of description, a case in which the connecting member 200 electrically connects the plurality of battery cells 100 including a first battery cell 100a and a second battery cell 100b will be described as an example.

The first battery cell 100a includes a first terminal and a second terminal. For example, the first battery cell 100a includes a rivet 30a and a case 20a. In addition, the second battery cell 100b includes a first terminal and a second terminal. For example, the second battery cell 100b includes a rivet 30b and a case 20b.

The first battery cell 100a and the second battery cell 100b may be positioned adjacent to each other. For example, the connecting member 200 may electrically connect the first terminal of the first battery cell 100a and the second terminal of the second battery cell 100b.

The first member 210 is joined to the rivet 30a of the first battery cell 100a. For example, a lower portion of the first member 210 is joined to an upper surface of the first battery cell 100a. In an embodiment, for example, the first member 210 may be joined to the rivet 30a of the first battery cell 100a by welding.

The second member 220 is joined to the case 20b of the second battery cell 100b. For example, a lower portion of the second member 220 is joined to an upper surface of the case 20b of the second battery cell 100b. In an embodiment, for example, the second member 220 may be joined to the case 20b of the second battery cell 100b by welding.

In an embodiment, as described above, the rivet 30 is inserted into the hole formed in the case 20. Accordingly, in a height direction of the battery cell 100, the rivet 30 may protrude upward from the upper surface of the case 20. That is, the upper surfaces of the rivet 30a of the first battery cell 100a and the case 20b of the second battery cell 100b may be positioned at different heights.

Accordingly, the first joint portion 211 and the second joint portion 221 may be positioned at different heights. For example, the first joint portion 211 joined to the rivet 30a may be positioned higher than the second joint portion 221 joined to the case 20b. To connect the first joint portion 211 and the second joint portion 221 while overcoming the height difference therebetween, an insertion passage 212 and/or an insertion portion 222 may be formed to be curved or bent.

In an embodiment, for example, as illustrated in FIGS. 7 and 8, the first member 210 may be formed to extend toward the second member 220, and at least a portion thereof may be formed to be bent. In an embodiment, unlike as illustrated in FIGS. 7 and 8, the first member 210 may be formed to extend in a straight line toward the second member 220.

In an embodiment, for example, as illustrated in FIG. 7, the second member 220 may be formed to extend toward the first member 210, and at least a portion thereof may be formed to be bent. For example, the insertion portion 222 may be bent so as to correspond to the height of the insertion passage 212. For example, the insertion portion 222 may first be bent upward from the second joint portion 221 and then bent toward the insertion passage 212 at a height at which the insertion passage 212 is located.

Accordingly, the insertion portion 222 may be inserted into the insertion passage 212 to couple the first member 210 and the second member 220. In an embodiment, the insertion portion 222 may be inserted sufficiently deep into the insertion passage 212 by being inserted at a same height as the insertion passage 212. Accordingly, the insertion portion 222 and the insertion passage 212 may be firmly coupled to each other.

In an embodiment, for example, as illustrated in FIG. 8, the second member 220 may be formed to extend toward the first member 210, and at least a portion thereof may be formed to be bent. For example, the insertion portion 222 may be bent upward. In an embodiment, the insertion passage 212 is bent downward and extends toward the insertion portion 222.

Accordingly, the insertion portion 222 may be inserted into the insertion passage 212 to couple the first member 210 and the second member 220. In an embodiment, the insertion passage 212 extends longer toward the insertion portion 222, and the insertion portion 222 may be formed relatively shorter. As described above, the first member 210 may include the first material and the second member 220 may include the second material. In an embodiment, the second material may generally include a more expensive material than the first material. Accordingly, the insertion portion 222 may be formed relatively short, thereby contributing to reducing the material cost of the connecting member 200.

However, a form in which the first member 210 and the second member 220 are coupled is not limited to the examples illustrated in FIGS. 7 and 8. The connecting member 200 may have any suitable forms in which the first member 210 and the second member 220 are connected by the second member 220 being inserted into the first member 210. Further, the connecting member 200 may have a form in which the first member 210 and the second member 220 are connected by the first member 210 being inserted into the second member 220. Herein, a case in which the first member 210 and the second member 220 are connected by the second member 220 being inserted into the first member 210 will be described as an example.

As described above, the first member 210 and the second member 220 form a sandwich structure by the second member 220 being inserted into the first member 210. In an embodiment, the sandwich structure may be in a semi-molten or room-temperature molten state. For example, a bonded interface bonded in a semi-molten or room-temperature molten state is formed between the insertion portion 222 and the insertion passage 212. In this case, the semi-molten bonding includes, for example, hot press bonding, ultrasonic bonding, cladding bonding, and the like.

Accordingly, the first member 210 and the second member 220 may form a superior bonded interface through semi-molten bonding or room-temperature molten-state bonding. For example, the first member 210 and the second member 220 may form a high-strength structure with a superior bonded interface even if the first member 210 and the second member 220 contain different dissimilar materials.

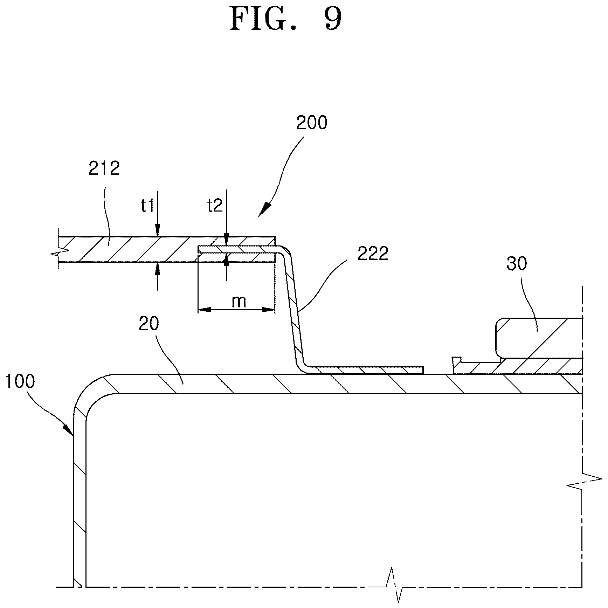

FIG. 9 illustrates a connecting member 200 according to an embodiment of the present invention.

A connecting member 200 according to an embodiment of the present invention (including, for example, the connecting member illustrated in FIGS. 4 to 8) includes a first member 210 provided with an insertion passage 212 formed on a side and a second member 220 provided with an insertion portion 222 formed on a side and connected to the first member 210 as the insertion portion 222 is inserted into the insertion passage 212.

In an embodiment, for example, a length m of a section of the insertion portion 222 inserted into the insertion passage 212 is 30% or more and 60% or less of a width of the insertion portion 222. If the length m of the section to be inserted is less than 30% of the width of the insertion portion 222, it may be difficult to secure a bonding area for bonding between the first member 210 and the second member 220. For example, it may be difficult to apply a hot press method between the first member 210 and the second member 220. In addition, if the length m of the section to be inserted is greater than 60% of the width of the insertion portion 222, there is a risk that a short circuit may occur when coming into contact with the adjacent battery cell 100. Accordingly, in an embodiment, the length m of the section of the insertion portion 222 inserted into the insertion passage 212 is 30% or more and 60% or less of the width of the insertion portion 222.

In an embodiment, for example, a thickness t1 of the first member 210 and a thickness t2 of the second member 220 may be set by considering an amount of current in the battery cell 100, a weight ratio in the battery pack 1000, and/or a cost of the first member 210 and/or the second member 220.

In an embodiment, for example, the thickness t2 of the second member 220 is formed to be 15% or more and 45% or less of the thickness t1 of the first member 210. In an embodiment, for example, the thickness t2 of the second member 220 is formed to be 20% or more and 40% or less of the thickness t1 of the first member 210. In an embodiment, for example, the thickness t2 of the second member 220 is formed to be 20% or more and 35% or less of the thickness t1 of the first member 210. In an embodiment, for example, the thickness t2 of the second member 220 is formed to be 25% or more and 40% or less of the thickness t1 of the first member 210. In an embodiment, for example, the thickness t2 of the second member 220 is formed to be 25% or more and 35% or less of the thickness t1 of the first member 210. In an embodiment, for example, the thickness t1 of the first member 210 may be 1.00 mm, and the thickness of the second member 220 may be 0.33 mm.

If the thickness t2 of the second member 220 is less than 15% of the thickness t1 of the first member 210, there may be a problem that strength of the second member 220 is weak. In this case, the strength includes a peel strength measured by, for example, a peel off test. If the thickness t2 of the second member 220 is greater than 45% of the thickness t1 of the first member 210, there may be a problem that the bonding strength between the first member 210 and the second member 220 is weak. Therefore, in an embodiment, the thickness t2 of the second member 220 is formed to a thickness of 15% or more and 45% or less of the thickness t1 of the first member 210.

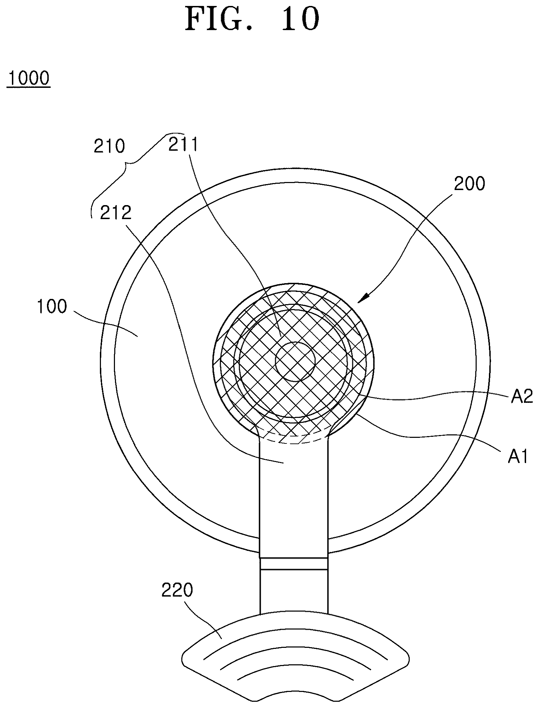

FIG. 10 illustrates a connecting member 200 according to an embodiment of the present invention.

A connecting member 200 according to an embodiment of the present invention (including, for example, the connecting member illustrated in FIGS. 4 to 9) includes a first member 210 provided with an insertion passage 212 formed on a side and a second member 220 connected to the first member 210.

The first member 210 includes an insertion passage 212, formed on a side and a first joint portion 211 formed on another side and connected to the insertion passage 212. The first joint portion 211 is an area that is joined to the first terminal.

The first joint portion 211 is joined to the first terminal such that the first member 210 and the battery cell 100 are connected. In this case, a joint interface is formed between the first joint portion 211 and the first terminal. For example, a joint surface is formed between the first joint portion 211 and the first terminal.

In FIG. 10, reference numeral A1 denotes an area of the first terminal on a plane including the joint surface. For example, A1 denotes an upper area of the rivet 30. In FIG. 10, reference numeral A2 denotes an area of the first joint portion 211 on the plane including the joint surface. For example, A2 denotes an area of a lower portion of the first joint portion 211.

For example, at the interface of the first joint portion 211 and the first terminal, the area A1 of the first terminal is greater than or equal to the area A2 of the first joint portion 211. For example, at the interface of the first joint portion 211 and the first terminal, the area A1 of the first terminal may be greater than the area A2 of the first joint portion 211. That is, when viewed from above, the area A2 of the first joint portion 211 may be smaller than or equal to the area A1 of the first terminal.

In an embodiment, for example, the first joint portion 211 may be joined to the first terminal through a pusher-type jig. In this case, the first joint portion 211 may be formed to have a size smaller than or equal to the first terminal, thereby improving the pressing properties of the jig. That is, the first joint portion 211 is formed to have a size smaller than or equal to the first terminal, thereby improving the degree of adhesion between the first joint portion 211 and the first terminal and/or improving joint quality.

Therefore, at the interface of the first joint portion 211 and the first terminal, in an embodiment, the area A1 of the first terminal is greater than or equal to the area A2 of the first joint portion 211.

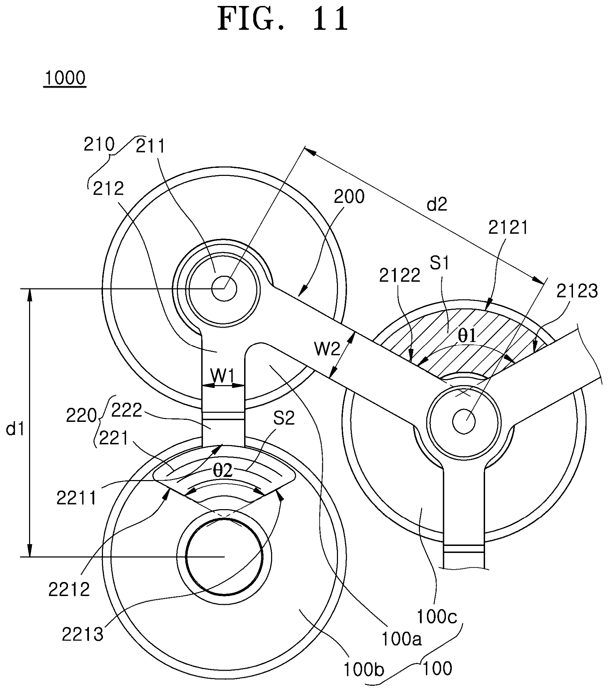

FIG. 11 illustrates a connecting member 200 according to an embodiment of the present invention.

A connecting member 200 according to an embodiment of the present invention (including, for example, the connecting member illustrated in FIGS. 4 to 10) includes a first member 210 provided with an insertion passage 212 formed on a side and a second member 220 provided with an insertion portion formed on a side and connected to the first member 210 as the insertion portion is inserted into the insertion passage.

A plurality of battery cells 100 includes a first battery cell 100a and a second battery cell 100b that are electrically connected by the connecting member 200. In an embodiment, the plurality of battery cells 100 may further include a third battery cell 100c that is electrically connected by the connecting member 200.

In FIG. 11, reference numeral d1 denotes a first distance, which is a distance between the first battery cell 100a and the second battery cell 100b that are electrically connected. The first distance d1 is a distance between a first terminal of the first battery cell 100a and a first terminal of the second battery cell 100b when viewed from above. The first distance d1 is a distance between a center of the first battery cell 100a and a center of the second battery cell 100b when viewed from above. In this case, the first battery cell 100a and the second battery cell 100b are positioned adjacent to each other. In this case, the first battery cell 100a is connected to a first joint portion 211 of the connecting member 200, and the second battery cell 100b is connected to a second joint portion 221 of the connecting member 200.

In an embodiment, for example, the first distance d1 is 20.0 mm or more and 57.5 mm or less. In an embodiment, for example, the first distance d1 is 30.5 mm or more and 57.5 mm or less. In an embodiment, for example, the first distance d1 is 40.0 mm or more and 57.5 mm or less. In an embodiment, for example, the first distance d1 is 42.5 mm or more and 57.5 mm. In an embodiment, for example, the first distance d1 is 45.0 mm or more and 57.5 mm or less. In an embodiment, for example, the first distance d1 is 47.5 mm or more and 57.5 mm or less. In an embodiment, for example, the first distance d1 is 45.0 mm or more and 55.0 mm or less. In an embodiment, for example, the first distance d1 is 47.5 mm or more and 55.0 mm or less.

If the first distance d1 is less than 20.0 mm, there may be a problem that the capacity of the plurality of battery cells 100 connected by the connecting member 200 becomes excessively small. If the first distance d1 is greater than 57.5 mm, a length of the first member 210 may become excessively long, which may increase the resistance of the connecting member 200.

Therefore, considering the capacity and/or amount of current of the battery cells 100 connected by the connecting member 200, the capacity of the battery pack 1000 including the battery cells 100, and the like, in an embodiment, the first distance d1 is 20.0 mm or more and 57.5 mm or less.

In FIG. 11, reference numeral d2 denotes a second distance, which is a distance between the first battery cell 100a and the third battery cell 100c that are electrically connected. The second distance d2 is a distance between the first terminal of the first battery cell 100a and a first terminal of the third battery cell 100c when viewed from above. The second distance d2 is a distance between a center of the first battery cell 100a and a center of the third battery cell 100c when viewed from above. In this case, the first battery cell 100a and the third battery cell 100c are positioned adjacent to each other. In this case, the first battery cell 100a is connected to the first joint portion 211 of the connecting member 200, and the third battery cell 100c is connected to the first joint portion 211 of the connecting member 200.

In an embodiment, for example, the second distance d2 is 20.0 mm or more and 57.5 mm or less. In an embodiment, for example, the second distance d2 is 30.0 mm or more and 57.5 mm or less. In an embodiment, for example, the second distance d2 is 40.0 mm or more and 57.5 mm or less. In an embodiment, for example, the second distance d2 is 42.5 mm or more and 57.5 mm or less. In an embodiment, for example, the second distance d2 is 45.0 mm or more and 57.5 mm or less. In an embodiment, for example, the second distance d2 is 47.5 mm or more and 57.5 mm or less. In an embodiment, for example, the second distance d2 is 45.0 mm or more and 55.0 mm or less. In an embodiment, for example, the second distance d2 is 47.5 mm or more and 55.0 mm or less.

If the second distance d2 is less than 20.0 mm, there may be a problem that the capacity of the plurality of battery cells 100 connected by the connecting member 200 becomes excessively small. If the second distance d2 is greater than 57.5 mm, the length of the first member 210 may become excessively long, which may increase the resistance of the connecting member 200.

Therefore, considering the capacity and/or current of the battery cells 100 connected by the connecting member 200, the capacity of the battery pack 1000 including the battery cells 100, and the like, in an embodiment, the second distance d2 is 20.0 mm or more and 57.5 mm or less.

In an embodiment, the second distance d2 may be formed to be greater than or equal to the first distance d1.

In FIG. 11, reference numeral W1 denotes a first width W1, which is a width of a portion of the connecting member 200 connecting the first battery cell 100a and the second battery cell 100b. In this case, the first width W1 is a width of the connecting member 200 connecting the first battery cell 100a and the second battery cell 100b when viewed from above. In an embodiment, the first width W1 denotes a width of the insertion passage 212. In an embodiment, the first width W1 includes a width of the insertion portion 222.

In an embodiment, for example, the first width W1 is 3 mm or more and 20 mm or less. For example, if the first width W1 includes the width of the insertion passage 212, the first width W1 may be 4 mm to 20 mm. For example, if the first width W1 includes the width of the insertion portion 222, the first width W1 may be 3 mm to 16 mm. If the first width W1 is less than 3 mm or more than 20 mm, the resistance may become excessively large or the balancing of the connecting member 200 may decrease.

In FIG. 11, reference numeral W2 denotes a second width W2, which is a width of a portion of the connecting member 200 connecting the first battery cell 100a and the third battery cell 100c. In this case, the second width W2 is a width of a portion of the connecting member 200 connecting the first battery cell 100a and the third battery cell 100c when viewed from above. That is, the second width W2 denotes a width of the portion of the connecting member connecting adjacent first joint portions 211.

In an embodiment, the second width W2 may be formed to be greater than or equal to the first width W1. In an embodiment, for example, the second width W2 is 9 mm or more and 20 mm or less. If the second width W2 is less than 9 mm or more than 20 mm, the resistance may become excessively large or the balancing of the connecting member 200 may decrease.

In FIG. 11, a first area S1 denotes an area on which the second member 220 may be joined to the battery cell 100. In this case, the first area S1 may be set according to an arrangement between the first members 210 in the connecting member 200 including a plurality of first members 210.

For example, the first area S1 may be defined by the first member 210 connected to a first terminal of an adjacent battery cell (e.g., the first battery cell 100a), a first member (not illustrated) connected to a first terminal of another adjacent battery cell (not illustrated), and an upper surface of the corresponding battery cell (e.g., the third battery cell 100c). In this case, a boundary of the first area S1 formed by the upper surface of the corresponding battery cell (e.g., the third battery cell 100c) is referred to as a first arc 2121. Additionally, a boundary of the first area S1 formed by the first member 210 connected to the first terminal of an adjacent battery cell (e.g., the first battery cell 100a) is referred to as a first straight line 2122. Additionally, a boundary of the first area S1 formed by the first member connected to the first terminal of another adjacent battery cell is referred to as a second straight line 2123.

That is, the first area S1 may be formed in a fan shape by the first arc 2121, the first straight line 2122, and the second straight line 2123. In this case, the first area S1 may be formed in the fan shape excluding the area corresponding to the first terminal of the corresponding battery cell (e.g., the third battery cell 100c). Herein, it may be described that the first area S1 is formed in a fan shape.

In this case, a straight line extending along the first straight line 2122 and a straight line extending along the second straight line 2123 may form a first angle θ1.

In an embodiment, for example, the first angle θ1 is formed to be 180° or less. If the first angle θ1 is greater than 180°, the number of secondary batteries 100 that may be accommodated in the battery pack 1000 decreases. That is, in this case, it is difficult to efficiently load the secondary batteries 100 in the battery pack 1000.

In an embodiment, for example, the first angle θ1 is formed to be 90° or more. If the first angle θ1 is formed to be less than 90°, similarly, the number of secondary batteries 100 that may be accommodated in the battery pack 1000 decreases. That is, in this case as well, it is difficult to efficiently load the secondary batteries 100 in the battery pack 1000.

However, if the loading efficiency of the secondary battery 100 accommodated inside the battery pack 1000 is not considered, for example, the first angle θ1 may be formed to be 30° or more and 330°or less. Or, for example, the first angle θ1 is formed to be 40° or more and 320° or less. Or, for example, the first angle θ1 is formed to be 50° or more and 310° or less. Or, for example, the first angle θ1 is formed to be 60° or more and 300° or less. Or, for example, the first angle θ1 is formed to be 70° or more and 290° or less. Or, for example, the first angle θ1 is formed to be 80° or more and 280° or less. Or, for example, the first angle θ1 is formed to be 90° or more and 270° or less.

In this case, if the first angle θ1 is formed to be less than 30° or more than 330°, a joint area of the second member 220 may decrease, thereby weakening a joint between the second member 220 and the second terminal and/or increasing the resistance. Therefore, in an embodiment, the first angle θ1 is formed to be 30° or more and 330° or less.

Also, in FIG. 11, a second area S2 represents an area of the second member 220 that is joined to the battery cell 100. In this case, the second area S2 may be set according to the first area S1. In an embodiment, for example, the second area S2 is set to be less than or equal to the first area S1.

In an embodiment, for example, the second area S2 corresponds to a joint area of the second joint portion 221 and is formed in a fan shape. The second area S2 may be formed in a fan shape by a second arc 2211 corresponding to an arc of the second joint portion 221, a third straight line 2212 corresponding to a boundary of a side of the second joint portion 221, and a fourth straight line 2213 corresponding to a boundary of another side of the second joint portion 221. In this case, the second area S2 is a shape excluding an area corresponding to the first terminal of the corresponding battery cell (e.g., the second battery cell 100b) from the fan shape, but may be referred to as the fan shape.

In this case, a straight line extending along the third straight line 2212 and a straight line extending along the fourth straight line 2213 may form a second angle θ2.

In an embodiment, for example, the second angle θ2 is formed to be less than or equal to the first angle θ1. In an embodiment, for example, the second angle θ2 may be formed to be 30° or more and 330° or less. In an embodiment, for example, the second angle θ2 is formed to be 40° or more and 320° or less. In an embodiment, for example, the second angle θ2 is formed to be 50° or more and 310° or less. In an embodiment, for example, the second angle θ2 is formed to be 60° or more and 300° or less. In an embodiment, for example, the second angle θ2 is formed to be 70° or more and 290° or less. In an embodiment, for example, the second angle θ2 is formed to be 80° or more and 280° or less. In an embodiment, for example, the second angle θ2 is formed to be 90° or more and 270° or less.

Accordingly, the first member 210 may be arranged considering the area in which the second member 220 is joined to the battery cell 100. For example, the first area S1 may be less than or equal to half the area of the upper surface of the case 20 of the battery cell 100.

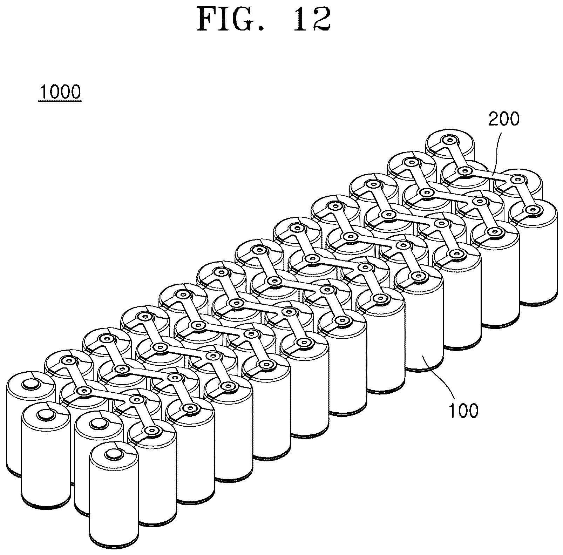

FIG. 12 is a perspective view schematically illustrating a battery pack according to an embodiment of the present invention.

A battery pack 1000 according to an embodiment of the present invention (including, for example, the battery pack 1000 illustrated in FIGS. 1, 4 and 5) includes a plurality of battery cells 100, each of which includes a first terminal and a second terminal, and a connecting member 200 that electrically connects at least some of the plurality of battery cells 100 (including, for example, the connecting member 200 illustrated in FIGS. 4 to 11), wherein the connecting member 200 includes a first member 210 having a side forming an insertion passage 212 and another side forming a first joint portion 211 joined to the first terminal, and a second member 220 having a side forming an insertion portion 222 inserted into the insertion passage 212 and connected to the first member 210 and another side forming a second joint portion 221 joined to the second terminal.

In an embodiment, at least one of a peel strength between the first joint portion 211 and the first terminal and a peel strength between the second joint portion 221 and the second terminal may be 50 kgf or greater. In an embodiment, for example, the peel strength between the second joint portion 221 and the second terminal is 50 kgf or greater. Thus, the connecting member 200 may provide a connecting member having high strength through the sandwich structure. In addition, the connecting member 200 may provide a connecting member with improved strength in the height direction of the battery cell 100.

In an embodiment, for example, resistance formed between the first joint portion 211 and the first terminal is 0.06 mΩ or less. In an embodiment, for example, the resistance formed between the second joint portion 221 and the second terminal is less than 0.12 mΩ. Moreover, the connecting member 200 may improve the joining strength with the battery cell 100 by including the first member 210 and the second member 220 that are connected to each other. For example, the connecting member 200 may improve the joining strength with the battery cell 100 by including the first member 210 and the second member 220 that include different materials.

Table 1 below shows experimental data comparing the effects between the connecting member 200 according to an embodiment of the present invention and a conventional connecting member.

**[Table 1]**

| Joint Area | First Terminal | | Second Terminal | |
|---|---|---|---|---|
| Connecting Member | Comparative Example 1 | Example | Comparative Example 2 | Example |
| Strength(kgf) | 13.6 | 63.6 | 6.9 | ≥60 |
| Resistance(mΩ) | 0.06~ | 0.05~0.06 | 0.12~0.14 | 0.108~0.117 |
| Void/crack/IMC | ○ | x | ○ | X |

In Table 1, the first terminal includes Al3003, and the second terminal includes SPCE. In Table 1, the thickness of the first terminal is 0.8T. In Table 1, the thickness of the second terminal is 0.8T.

In Table 1, Comparative Example 1 is a connecting member including a single material of Cu1100 and having a thickness of 0.5T. In addition, Comparative Example 2 in Table 1 is a connecting member including a single material of Al1050 and having a thickness of 0.5T. In addition, the Example in Table 1 is a connecting member of a different material in which the first member 210 includes Al1050 and has a thickness of 0.5T and the second member 220 includes Cu and has a thickness of 0.5T.

In Table 1, Comparative Example 1 was joined to the first terminal under the conditions of a power of 1.5 kW and a speed of 300 mm/s. In Table 1, the Example was joined to the first terminal under the conditions of a power of 1.3 kW and a speed of 300 mm/s.

In Table 1, Comparative Example 2 was joined to the second terminal under the conditions of a power of 1.5 kW and a speed of 410 mm/s. In Table 1, the Example was joined to the second terminal under the conditions of a power of 1.6 kW and a speed of 300 mm/s.

In Table 1, the strength (kgf) is the peel strength measured through a peel-off test.

As can be seen from Table 1, the Example has about 5 times the strength between the first terminal and the connecting member compared to Comparative Example 1 formed of a single material of Cu. In addition, the Example has about 8 times the strength between the second terminal and the connecting member compared to Comparative Example 2 formed of a single material of Al.

In addition, as can be seen from Table 1, the Example has a lower resistance value than Comparative Examples 1 and 2 formed of a single member.

According to embodiments of the present invention, a connecting member having improved welding reliability and/or a battery pack including the connecting member are provided.

According to embodiments of the present invention, a connecting member having high strength and/or a battery pack including the connecting member are provided.

According to embodiments of the present invention, a battery pack with improved stability is provided.

However, aspects and technical effects acquirable through the present invention are not limited to the above-described aspects and technical effects, and other aspects and technical effects that are not described will be clearly understood by those skilled in the art from the description of the invention.

Although the present invention has been described with reference to the embodiments shown in the drawings, these embodiments are merely examples, and it will be understood by those skill in the art that various modifications and equivalents are possible.

Therefore, the technical protection scope of the present invention should be determined by the claims.

## Claims

1. A connecting member comprising:
a first member comprising an insertion passage at a side thereof; and
a second member comprising an insertion portion at a side thereof and configured to connect to the first member when the insertion portion is inserted in the insertion passage.

2. The connecting member as claimed in claim 1, wherein the first member comprises a first material, and
the second member comprises a second material different from the first material.

3. The connecting member as claimed in claim 1 or 2, wherein a bonded interface, which is configured to be bonded in a semi-molten or room-temperature molten state, is formed between the insertion portion and the insertion passage.

4. The connecting member as claimed in claim 1, 2 or 3, wherein a length of a section of the insertion portion configured to be inserted into the insertion passage is 30% or more and 60% or less than a width of the insertion portion.

5. The connecting member as claimed in any preceding claim, wherein a thickness of the second member is 15% or more and 45% or less than a thickness of the first member.

6. A battery pack comprising:
a plurality of battery cells, each of which comprises a first terminal and a second terminal; and
the connecting member according to any preceding claim that electrically connects at least some of the plurality of battery cells,
wherein:
the side of the first member comprising the insertion passage is a first side thereof, and
the first member comprises a first joint portion at a second side thereof and that is joined to the first terminal of a battery cell of the plurality of battery cells; and
the side of the second member comprising an insertion portion is a first side thereof, and
the second member comprises a second joint portion at a second side thereof and that is joined to the second terminal of a battery cell of the plurality of battery cells.

7. The battery pack as claimed in claim 6, wherein the first terminal comprises a first material, and
the second terminal comprises a second material.

8. The battery pack as claimed in claim 7, wherein the first terminal comprises aluminum, and
the first material of the first terminal comprises aluminum.

9. The battery pack as claimed in claim 7 or 8, wherein the second terminal comprises one or more of iron and steel, e.g. SUS or SPCE, or an alloy thereof, and
the second material of the second terminal comprises one or more of copper, nickel, tungsten, silver, gold, titanium, and an alloy thereof.

10. The battery pack as claimed in any one of claims 6 to 9, wherein at least one of a peel strength between the first joint portion and the first terminal and a peel strength between the second joint portion and the second terminal is 50 kgf or greater.

11. The battery pack as claimed in any one of claims 6 to 10, wherein a resistance formed between the first joint portion and the first terminal is 0.06 mΩ or less.

12. The battery pack as claimed in any one of claims 6 to 11, wherein a resistance formed between the second joint portion and the second terminal is less than 0.12 mΩ.

13. The battery pack as claimed in any one of claims 6 to 12, wherein, at an interface between the first joint portion and the first terminal, an area of the first terminal is greater than or equal to an area of the first joint portion.

14. The battery pack as claimed in any one of claims 6 to 13, wherein the plurality of battery cells comprises a first battery cell and a second battery cell that are electrically connected by the connecting member, and
a distance between the first terminal of the first battery cell and the first terminal of the second battery cell is 20 mm or greater and 57.5 mm or less.

15. The battery pack as claimed in any one of claims 6 to 14, wherein, each of the plurality of battery cells further comprises:
an electrode assembly comprising a first electrode and a second electrode;
a case electrically connected to the second electrode to form the second terminal and accommodating the electrode assembly; and
a rivet electrically connected to the first electrode to form the first terminal and coupled to a hole of the case.
